# EUROPEAN PATENT APPLICATION

(11) **EP 4 353 547 A1**
(43) Date of publication of application: **17.04.2024**
(21) Application number: 21948766.7
(22) Date of filing: 07.07.2021
(51) Int. Cl.: B60S 1/60, B60S 1/62

(54) **SENSOR DETECTION METHOD, SENSOR DETECTION APPARATUS, AND VEHICLE**

(71) Applicant: Huawei Technologies Co., Ltd., Shenzhen, Guangdong 518129 (CN)
(72) Inventor: FANG, Yeyang, Shenzhen, Guangdong 518129 (CN); CHEN, Yilun, Shenzhen, Guangdong 518129 (CN); LI, Shuaijun, Shenzhen, Guangdong 518129 (CN)
(74) Representative: Körber, Martin Hans
(86) International application number: PCT/CN2021/104872
(87) International publication number: WO 2023/279268

(57) **Abstract**

This application provides a sensor detection method, a sensor detection apparatus, and a vehicle. The method may be applied to the sensor detection apparatus. The method includes: A sensor detection apparatus obtains data collected by a plurality of sensors; the sensor detection apparatus extracts a feature from data collected by each of the plurality of sensors, to obtain a plurality of pieces of feature data; the sensor detection apparatus fuses the plurality of pieces of feature data to obtain fused data; and the sensor detection apparatus performs inference on the fused data to obtain clean status information of each of the plurality of sensors. According to embodiments of this application, accuracy of detecting a clean status of a sensor can be improved.

## Description

### TECHNICAL FIELD

This application relates to the artificial intelligence field, and more specifically, to a sensor detection method, a sensor detection apparatus, and a vehicle.

### BACKGROUND

A plurality of types of environment sensing sensors (including but not limited to a camera, a lidar, a millimeter-wave radar, and the like) are installed in an intelligent driving vehicle. An intelligent driving algorithm relies on one or more types of sensors to implement real-time sensing for an ambient environment.

These sensors are exposed directly to an external environment or covered with protection apparatuses on surfaces of the sensors. The protection apparatuses are exposed to the external environment. A vehicle in motion may encounter cases such as dust, sewage splashing, or rain or snow coverage. When the surfaces of the sensors or the protection apparatuses thereof are covered by dust, dirt, rain, or snow, performance of a sensing system in an autonomous driving vehicle is greatly affected. Consequently, an event affecting security of an autonomous driving system occurs. For example, false obstacle detection occurs, or detection of a target is missed.

Currently, the vehicle may determine, by using another simple sensor, whether a target sensor needs to be cleaned. For example, if the vehicle determines, by using a rainfall sensor, that it is raining currently, it is considered that the target sensor (for example, a camera under a front windshield) is affected by rain. Currently determining whether the target sensor needs to be cleaned does not mean directly determining a status of the target sensor. Logic of determining whether the target sensor needs to be cleaned depends more on experience (for example, if it rains, the camera may be wet by rain). As a result, a real clean status of the sensor cannot be directly determined, affecting a result of detecting a clean status of the sensor.

Therefore, how to improve accuracy of detecting the clean status of the sensor becomes an urgent problem to be resolved.

### SUMMARY

This application provides a sensor detection method, a sensor detection apparatus, and a vehicle, to help improve accuracy of detecting a clean status of a sensor.

In this application, the "vehicle" may include one or more means of transportation of different types, or may include one or more transportation tools or movable objects of different types that operate or move on land (for example, a highway, a road, or a railway), on water (for example, a waterway, a river, or an ocean), or in space. For example, the vehicle may include a car, a bicycle, a motorcycle, a train, a subway, an airplane, a ship, an aircraft, a robot, or a transportation tool or a movable object of another type.

According to a first aspect, a sensor detection method is provided. The method includes: obtaining data collected by a plurality of sensors; extracting a feature from data collected by each of the plurality of sensors, to obtain a plurality of pieces of feature data; fusing the plurality of pieces of feature data to obtain fused data; and performing inference on the fused data to obtain clean status information of each of the plurality of sensors.

In this embodiment of this application, features are extracted from the data collected by the plurality of sensors, and the data is fused. Then, clean statuses of the plurality of sensors may be obtained by performing inference on the fused data. This helps improve accuracy of detecting the clean statuses of the sensors. In addition, the clean statuses of the plurality of sensors are simultaneously obtained, so that a device in which the sensors are located can better understand availability of the sensors in this case. For some intelligent devices (for example, a vehicle), security performance of the intelligent devices can be improved.

In some possible implementations, the extracting a feature from data collected by each of the plurality of sensors, to obtain a plurality of pieces of feature data includes: inputting the data collected by each of the plurality of sensors into a corresponding encoder, to obtain the plurality of pieces of feature data.

In some possible implementations, the encoder may be a rule-based encoder, or the encoder may be a neural network.

In some possible implementations, the performing inference on the fused data to obtain clean status information of each of the plurality of sensors includes: performing inference on the fused data to obtain inference data; and decoding the inference data to obtain clean status information of the plurality of sensors.

In some possible implementations, the decoding the inference data includes: inputting the inference data into a decoder, to obtain the clean status information of the plurality of sensors.

In some possible implementations, the decoder may be a rule-based encoder, or the decoder may be a neural network.

In some possible implementations, a sensor detection apparatus may perform the sensor detection method, and the sensor detection apparatus may be a sensor detection apparatus located in a vehicle.

With reference to the first aspect, in some implementations of the first aspect, the method further includes: determining, based on the clean status information of each of the plurality of sensors, that at least one sensor in the plurality of sensors needs to be cleaned; and controlling a sensor cleaning apparatus to clean the at least one sensor.

In this embodiment of this application, when a clean status of the at least one sensor is unclean, the sensor cleaning apparatus may be controlled to clean the sensor. This ensures that the sensor to which dirt is attached is quickly cleaned, to help ensure accuracy of data detected by the sensor.

With reference to the first aspect, in some implementations of the first aspect, clean status information of the at least one sensor includes information indicating that an object is attached to a surface of each sensor in the at least one sensor and a type of the object. The controlling a sensor cleaning apparatus to clean the at least one sensor includes: cleaning each sensor in the at least one sensor based on the type of the object attached to the surface of each sensor in the at least one sensor.

In this embodiment of this application, the sensor detection apparatus may identify a type of an object attached to a sensor, to send a correct cleaning instruction to the sensor cleaning apparatus. For example, when a result output by the sensor detection apparatus is that ice and snow is attached to the sensor, the sensor cleaning apparatus may be controlled to enable a heating and snow melting function, instead of enabling a water spray cleaning function when the ice and snow is detected as muck by mistake.

With reference to the first aspect, in some implementations of the first aspect, the plurality of sensors may be sensors located in the vehicle. The method further includes: The sensor detection apparatus determines, based on the clean status information of each of the plurality of sensors, a confidence level of the data collected by each of the plurality of sensors; and the sensor detection apparatus sends an instruction to an autonomous driving system, where the instruction includes the confidence level of the data collected by each sensor, so that the autonomous driving system degrades an autonomous driving level based on the confidence level of the data collected by each of the plurality of sensors, or sends first prompt information to a prompt apparatus, where the first prompt information indicate the first prompt apparatus to prompt a user to take over the vehicle.

In this embodiment of this application, the sensor detection apparatus may output, to the autonomous driving system, the confidence level of the data collected by each sensor, so that the autonomous driving system can determine, based on a confidence level of the data collected by the plurality of sensors, whether to degrade the autonomous driving level or whether to enable the user to take over the vehicle. In this way, driving safety in an autonomous driving state can be ensured.

In an embodiment, before the determining, based on the clean status information of each of the plurality of sensors, a confidence level of the data collected by each of the plurality of sensors, the method further includes: determining that the vehicle is in an autonomous driving state.

It should be understood that the vehicle in the autonomous driving state mentioned in embodiments of this application may mean that the vehicle is at autonomous driving levels L1 to L5 specified by the Society of Automotive Engineers SAE. The autonomous driving state does not necessarily mean that the vehicle is in a non-manual driving state. For example, when the vehicle is at an autonomous driving level L2, in other words, the vehicle is in the autonomous driving state, the vehicle may need to be manually driven.

With reference to the first aspect, in some implementations of the first aspect, the method further includes: sending a second instruction to a second prompt apparatus, where the second instruction instructs the second prompt apparatus to prompt the user with the clean status information of each of the plurality of sensors.

In this embodiment of this application, after the sensor detection apparatus outputs clean statuses of the plurality of sensors, the sensor detection apparatus may further prompt the user with the clean status information of the plurality of sensors. In this way, the user can immediately obtain the clean status information of the plurality of sensors, and then the user can also clean the plurality of sensors immediately.

In some possible implementations, that the second prompt apparatus prompts the user with the clean status information of each of the plurality of sensors includes: The second prompt apparatus prompts the user with the clean status information of the plurality of sensors by using an HMI.

In some possible implementations, that the second prompt apparatus prompts the user with the clean status information of each of the plurality of sensors includes: The second prompt apparatus prompts the user with the clean status information of the plurality of sensors by using a sound.

In some possible implementations, the sensor detection apparatus is located in the vehicle, and that the second prompt apparatus prompts the user with the clean status information of each of the plurality of sensors includes: prompting the user with the clean status information of each of the plurality of sensors by using an ambient light.

With reference to the first aspect, in some implementations of the first aspect, the plurality of sensors include at least two of a camera apparatus, a lidar, a millimeter-wave radar, or an ultrasonic radar.

With reference to the first aspect, in some implementations of the first aspect, the plurality of pieces of feature data all are feature data in a first coordinate system.

In this embodiment of this application, the sensor detection apparatus may separately extract the features from the plurality of pieces of data, to obtain the plurality of pieces of feature data in a same coordinate system. This helps the sensor detection apparatus perform data fusion on the plurality of pieces of feature data.

With reference to the first aspect, in some implementations of the first aspect, the first coordinate system is an image coordinate system or a bird eye view BEV coordinate system.

According to a second aspect, a sensor detection apparatus is provided. The sensor detection apparatus includes: an obtaining unit, configured to obtain data collected by a plurality of sensors; a feature extraction unit, configured to extract a feature from data collected by each of the plurality of sensors, to obtain a plurality of pieces of feature data; a data fusion unit, configured to fuse the plurality of pieces of feature data to obtain fused data; and an inference unit, configured to perform inference on the fused data to obtain clean status information of each of the plurality of sensors.

With reference to the second aspect, in some implementations of the second aspect, the sensor detection apparatus further includes: a first determining unit, configured to determine, based on the clean status information of each of the plurality of sensors, that at least one sensor in the plurality of sensors needs to be cleaned; and a first control unit, configured to control a sensor cleaning apparatus to clean the at least one sensor.

With reference to the second aspect, in some implementations of the second aspect, clean status information of the at least one sensor includes information indicating that an object is attached to a surface of each sensor in the at least one sensor and a type of the object. The control unit is specifically configured to clean each sensor in the at least one sensor based on the type of the object attached to the surface of each sensor in the at least one sensor.

With reference to the second aspect, in some implementations of the second aspect, the sensor detection apparatus further includes: a second determining unit, configured to determine, based on the clean status information of each of the plurality of sensors, a confidence level of the data collected by each of the plurality of sensors; and a second control unit, configured to degrade an autonomous driving level based on the confidence level of the data collected by each of the plurality of sensors, or send a first instruction to a first prompt apparatus, where the first instruction is used by the first prompt apparatus to prompt a user to take over a vehicle.

With reference to the second aspect, in some implementations of the second aspect, the sensor detection apparatus further includes: a sending unit, configured to send a second instruction to a second prompt apparatus, where the second instruction instructs the second prompt apparatus to prompt the user with the clean status information of each of the plurality of sensors.

With reference to the second aspect, in some implementations of the second aspect, the plurality of sensors include at least two of a camera apparatus, a lidar, a millimeter-wave radar, or an ultrasonic radar.

With reference to the second aspect, in some implementations of the second aspect, the plurality of pieces of feature data all are feature data in a first coordinate system.

With reference to the second aspect, in some implementations of the second aspect, the first coordinate system is an image coordinate system or a bird eye view BEV coordinate system.

With reference to the second aspect, in some implementations of the second aspect, the sensor detection apparatus is located in a cloud server.

According to a third aspect, an apparatus is provided. The apparatus includes a unit configured to perform the sensor detection method according to any one of the implementations of the first aspect.

According to a fourth aspect, an apparatus is provided. The apparatus includes a processing unit and a storage unit. The storage unit is configured to store instructions, and the processing unit executes the instructions stored in the storage unit, so that the apparatus performs the method according to any one of the possible implementations of the first aspect.

Optionally, the processing unit may be a processor, and the storage unit may be a memory. The memory may be a storage unit (for example, a register or a cache) in a chip, or may be a storage unit (for example, a read-only memory or a random access memory) located outside a chip in an intelligent device.

According to a fifth aspect, an intelligent device is provided. The intelligent device includes the sensor detection apparatus according to the second aspect, the apparatus according to the third aspect, or the apparatus according to the fourth aspect.

In some possible implementations, the intelligent device may include a vehicle or the like.

According to a sixth aspect, a system is provided. The system includes a plurality of sensors and a sensor detection apparatus, where the sensor detection apparatus may be the sensor detection apparatus according to any one of the implementations of the second aspect.

With reference to the sixth aspect, in some implementations of the sixth aspect, the sensor detection apparatus may be located in a cloud server.

With reference to the sixth aspect, in some implementations of the sixth aspect, the system further includes an apparatus configured to receive instructions sent by the cloud server.

According to a seventh aspect, a computer program product is provided. The computer program product includes computer program code. When the computer program code is run on a computer, the computer is enabled to perform the method according to the first aspect.

It should be noted that all or some of the computer program code may be stored in a first storage medium. The first storage medium may be encapsulated together with a processor, or may be encapsulated separately from a processor. This is not specifically limited in this embodiment of this application.

According to an eighth aspect, a computer-readable medium is provided. The computer-readable medium stores program code. When the computer program code is run on a computer, the computer is enabled to perform the method according to the first aspect.

### BRIEF DESCRIPTION OF DRAWINGS

FIG. 1 is a schematic functional block diagram of a vehicle according to an embodiment of this application;
FIG. 2 is a schematic diagram of sensing ranges of various sensors;
FIG. 3 is a schematic block diagram of an architecture of a system according to an embodiment of this application;
FIG. 4 is a schematic block diagram of an architecture of another system according to an embodiment of this application;
FIG. 5 is a system flowchart of detecting a clean status of a sensor according to an embodiment of this application;
FIG. 6 is a schematic diagram of a process of processing data by a sensor detection apparatus according to an embodiment of this application;
FIG. 7 is a schematic diagram of prompting a user with a clean status of a sensor by using a central display screen according to an embodiment of this application;
FIG. 8 is another schematic diagram of prompting a user with a clean status of a sensor by using a central display screen according to an embodiment of this application;
FIG. 9 is a schematic diagram of a process of identifying a clean status of a sensor according to an embodiment of this application;
FIG. 10 is a schematic diagram of a process of identifying a clean status of another sensor according to an embodiment of this application;
FIG. 11 is a schematic diagram of a process of identifying a clean status of another sensor according to an embodiment of this application;
FIG. 12 is a schematic diagram of a process of identifying a clean status of another sensor according to an embodiment of this application;
FIG. 13 is a schematic diagram of a process of identifying a clean status of another sensor according to an embodiment of this application;
FIG. 14 is a schematic diagram of a process of identifying a clean status of another sensor according to an embodiment of this application;
FIG. 15 is a schematic diagram of a process of identifying a clean status of another sensor according to an embodiment of this application;
FIG. 16 is a schematic flowchart of a sensor cleaning method according to an embodiment of this application;
FIG. 17 is a schematic block diagram of a sensor detection apparatus according to an embodiment of this application; and
FIG. 18 is a schematic diagram of a structure of a system according to an embodiment of this application.

### DESCRIPTION OF EMBODIMENTS

The following describes technical solutions of this application with reference to accompanying drawings.

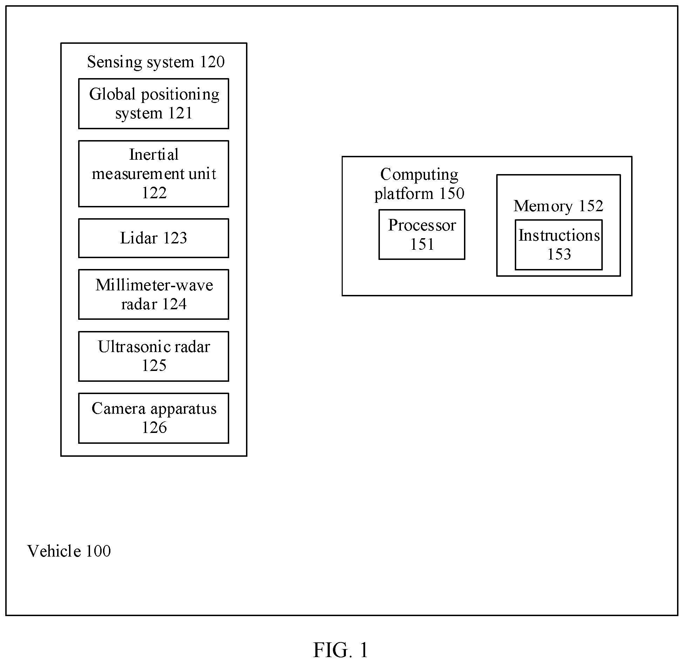

FIG. 1 is a schematic functional block diagram of a vehicle 100 according to an embodiment of this application.

The vehicle 100 may include a sensing system 120 and a computing platform 150. The sensing system 120 may include several types of sensors that sense information about an ambient environment of the vehicle 100. For example, the sensing system 120 may include one or more of a global positioning system 121 (the global positioning system may be a GPS system, a BeiDou system or another positioning system), an inertia measurement unit (inertial measurement unit, IMU) 122, a lidar 123, a millimeter-wave radar 124, an ultrasonic radar 125, and a camera apparatus 126.

Some or all of functions of the vehicle 100 are controlled by the computing platform 150. The computing platform 150 may include at least one processor 151. The processor 151 may execute instructions 153 stored in a non-transitory computer-readable medium such as a memory 152. In some embodiments, the computing platform 150 may alternatively be a plurality of computing devices that control an individual component or a subsystem of the vehicle 100 in a distributed manner.

The processor 151 may be any conventional processor, for example, a central processing unit (central processing unit, CPU). Alternatively, the processor 151 may alternatively be a digital signal processor (digital signal processor, DSP), a graphics processing unit (graphics processing unit, GPU), a field programmable gate array (field programmable gate array, FPGA), a system-on-a-chip (system-on-a-chip, SOC), an application-specific integrated chip (application-specific integrated circuit, ASIC), or a combination thereof.

The vehicle 100 may include an advanced driving assistance system (advanced driving assistant system, ADAS). The ADAS obtains information around the vehicle by using a plurality of types of sensors (including but not limited to: the lidar, the millimeter-wave radar, the camera apparatus, the ultrasonic sensor, the global positioning system, and the inertia measurement unit) in the vehicle, and analyzes and processes the obtained information, to implement functions such as obstacle sensing, target identification, vehicle positioning, path planning, and driver monitoring/reminder. This improves driving safety, automation, and comfort of the vehicle.

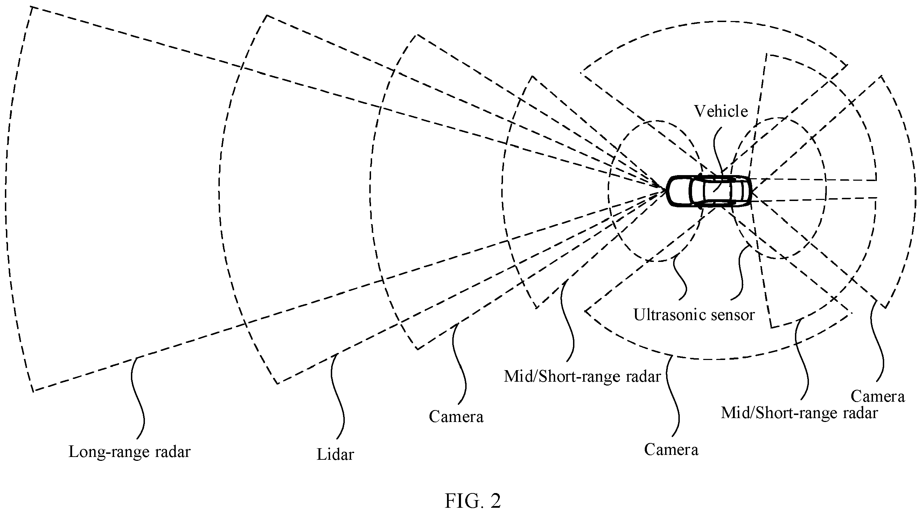

FIG. 2 is a schematic diagram of sensing ranges of various sensors. The sensors may include, for example, the lidar, the millimeter-wave radar, the camera apparatus, and the ultrasonic sensor that are shown in FIG. 1. The millimeter-wave radar may be classified into a long-range radar and a mid/short-range radar. For example, a farthest sensing range of the lidar is about 150 meters, a farthest sensing range of the long-range millimeter-wave radar is about 250 meters, a farthest sensing range of the mid/short-range millimeter-wave radar is about 120 meters, a farthest sensing range of a camera is about 200 meters, and a farthest sensing range of the ultrasonic radar is about 5 meters.

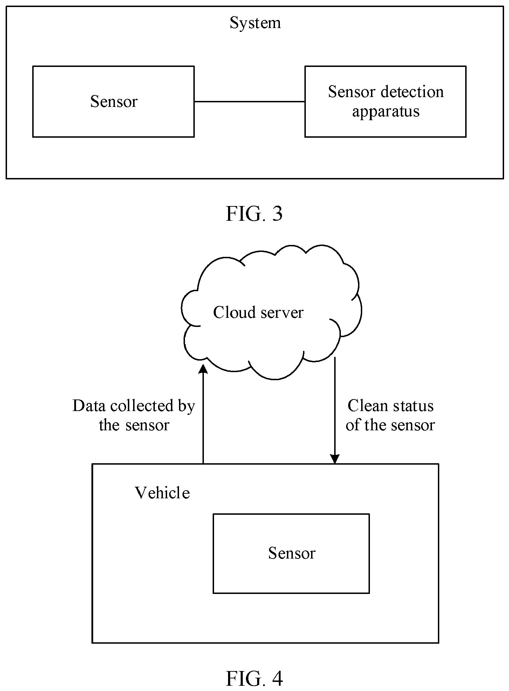

FIG. 3 is a schematic block diagram of an architecture of a system according to an embodiment of this application. As shown in FIG. 3, the system includes a sensor and a sensor detection apparatus. For example, the sensor may include one or more sensors (for example, the lidar 123, the millimeter-wave radar 124, the ultrasonic radar 125, and the camera apparatus 126) in the sensing system 120 shown in FIG. 1. The sensor detection apparatus may be deployed on the computing platform 150 shown in FIG. 1, or may be deployed on a cloud server to notify the computing platform 150 of a detection result.

The sensor is configured to sense the vehicle and an ambient environment of the vehicle, to obtain data. For example, the sensor may include one or more cameras and one or more lidar. Data output by the sensor may be video stream data obtained by the cameras, point cloud data obtained by the lidar, and the like.

The sensor detection apparatus may be configured to: obtain data collected by a plurality of sensors, and perform feature fusion and inference on the data collected by the plurality of sensors, to determine clean statuses of the plurality of sensors. Because the data collected by the plurality of sensors is fused, the clean statuses that are of the plurality of sensors and that are obtained through inference are more accurate.

In an embodiment, the sensor detection apparatus may be deployed inside the vehicle in a form of a hardware module and/or a software module. For example, the sensor detection apparatus is deployed on the computing platform 150, or the sensor detection apparatus may be a computing platform located in the cloud server. For example, FIG. 4 is a schematic block diagram of an architecture of another system according to an embodiment of this application. The architecture of the system includes a sensor in a vehicle and a cloud server. The vehicle may send, to the cloud server by using a network, data collected by the sensor. A sensor detection apparatus in the cloud server may process the data collected by the sensor, to obtain a clean status of the sensor. The cloud server may send the clean status of the sensor to the vehicle by using the network, for example, send the clean status of the sensor to a corresponding processing module in a computing platform 150 of the vehicle.

Optionally, the system may further include a sensor cleaning apparatus. The sensor detection apparatus may control, based on the clean status of the sensor, the sensor cleaning apparatus to perform different cleaning operations. The sensor detection apparatus may alternatively provide the clean status of the sensor for the corresponding processing module, and the processing module controls, based on the clean status of the sensor, the sensor cleaning apparatus to perform different cleaning operations. The sensor detection apparatus continuously detects and determines whether the sensor is clean. Because the sensor detection apparatus may use a solution of feature layer multi-sensor fusion, accuracy and scenario applicability of the clean status (for example, whether dirt is attached to the sensor and a type of the dirt) of the sensor are optimized. The sensor cleaning apparatus may enable, in a targeted manner, functions such as heating and water spraying based on the clean status of the sensor, to reduce occurrence of a miscleaning event, and help improve a cleaning effect of the sensor.

Optionally, the system may further include a prompt apparatus. The sensor detection apparatus may control, based on the clean status of the sensor, the prompt apparatus to prompt a user with the clean status of the sensor. For example, the system is located in the vehicle, the prompt apparatus may be a cockpit domain controller (cockpit domain controller, CDC). When the sensor detection apparatus determines that dirt is attached to the sensor, the sensor detection apparatus may send an instruction to the CDC, where the instruction may include the clean status of the sensor. In response to receiving the instruction, the CDC may control a vehicle-mounted voice assistant to prompt, by using a sound, the user that the dirt is attached to the sensor. Alternatively, the CDC may display prompt information by using an HMI, where the prompt information is used to prompt that the dirt is attached to the sensor.

It should be understood that, the sensor detection apparatus may directly send the instruction to the prompt apparatus. Alternatively, the sensor detection apparatus may provide the clean status of the sensor for the corresponding processing module, and the processing module controls, based on the clean status of the sensor, the prompt apparatus to prompt the user.

Optionally, the system may further include an ADAS system. After clean status information that is of sensors and that is output by the sensor detection apparatus indicates that the dirt is attached to one or more sensors, the sensor detection apparatus may send an instruction to the ADAS system. The instruction instructs that the dirt is attached to the one or more sensors. After receiving the instruction, the ADAS system may determine a confidence level of data collected by each of the one or more sensors. The ADAS system may further determine, based on the confidence level of the data collected by each sensor, to perform function degradation on the vehicle. Alternatively, the ADAS system may send an instruction to the prompt apparatus, where the instruction instructs the prompt apparatus to prompt the user to take over the vehicle.

In an embodiment, the sensor detection apparatus may alternatively determine, based on the case in which the dirt is attached to the one or more sensors, a confidence level of data collected by the one or more sensors, and send, to the ADAS system, information about the confidence level of the data collected by the one or more sensors.

It should be understood that the sensor detection apparatus may directly send the instruction to the ADAS system. Alternatively, the sensor detection apparatus may provide clean statuses of the sensors to the corresponding processing module, and the processing module determines, based on the clean statuses of the sensors, the confidence level of the data collected by the sensors, and sends the information about the confidence level to the ADAS system.

It should be understood that the system may include one or more of the sensor cleaning apparatus, the prompt apparatus, and the ADAS system.

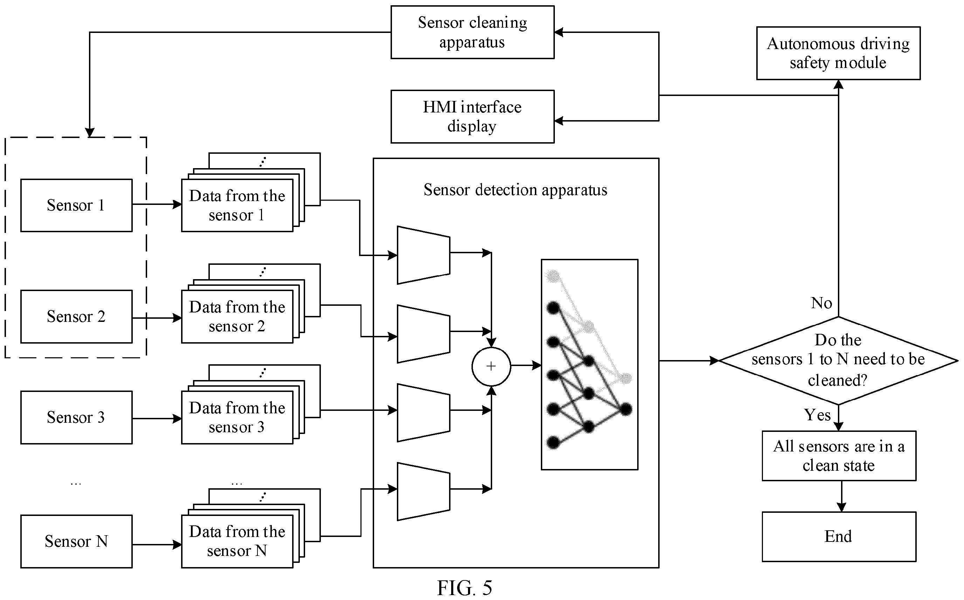

FIG. 5 is a system flowchart of detecting a clean status of a sensor according to an embodiment of this application. A sensor 1 to a sensor N separately obtain data, where N is a positive integer. The sensor 1 to the sensor N may send the obtained data to the sensor detection apparatus. The sensor detection apparatus may perform feature fusion and neural network inference on the data obtained by the sensor 1 to the sensor N, to output clean statuses of a plurality of sensors.

It should be understood that the sensors in embodiments of this application include, but are not limited to, various sensors carried in the vehicle, for example, the camera, the lidar, the millimeter-wave radar, and the ultrasonic radar. The sensor 1 to the sensor N shown in FIG. 5 may be a plurality of sensors of a same type but with different specifications or installation locations, or may be sensors of different types. For example, data output by the camera includes image data, and data output by the lidar includes point cloud data and the like. Data output by the sensors may be one or more frames of data.

It should be further understood that the sensor 1 to the sensor N may be sensors in the vehicle, or may be sensors in another device. For example, the sensor 1 to the sensor N may be sensors on an aircraft or a robot. A sensor cleaning method in embodiments of this application may be applied to an intelligent device including a plurality of sensors.

For example, if it is detected that dirt is attached to one or more sensors, and the sensors are attached or blocked, the sensor detection apparatus may send an instruction to the sensor cleaning apparatus, where the instruction instructs the sensor cleaning apparatus to clean the sensors to which the dirt is attached. In response to receiving the instruction, the sensor cleaning apparatus may clean the sensors to which the dirt is attached. In addition, the sensor detection apparatus may further send an instruction to the prompt apparatus, where the instruction is used by the prompt apparatus to prompt the user that the dirt is attached to the one or more sensors. For example, in response to receiving the instruction, the prompt apparatus may prompt, by using a human machine interface (human machine interface, HMI), the user with information indicating that the dirt is attached to the one or more sensors and a type of the dirt, and prompt the user that the sensor cleaning apparatus is cleaning the sensors to which the dirt is attached. As shown in FIG. 5, if a result output by the sensor detection apparatus is that the dirt is attached to the sensor 1 and the sensor 2, the sensor detection apparatus may indicate, to the sensor cleaning apparatus, that the dirt is attached to the sensor 1 and the sensor 2. In this case, the sensor cleaning apparatus may clean the sensor 1 and the sensor 2. It should be understood that the dirt in embodiments of this application includes, but is not limited to, water, ice, muck, a metal foreign object, or a non-metal foreign object.

For example, the sensor detection apparatus may further indicate, based on clean statuses of the one or more sensors, an autonomous driving safety module (for example, the ADAS system) to perform an operation such as function degradation. For example, an autonomous driving level is degraded from L3 to L1. For example, the sensor detection apparatus may send the clean statuses of the one or more sensors to the ADAS system. When the clean statuses of the one or more sensors are unclean, the ADAS system may determine that an autonomous driving function of the vehicle is affected. In this case, the ADAS system may degrade the vehicle from a "higher-level" autonomous driving function (for example, navigation cruise assistant (navigation cruise assistant, NCA) at the L3 level) to a "lower-level" autonomous driving function (for example, cruise control (cruise control, CC) at the L1 level). Alternatively, the ADAS system prompts the user to take over the vehicle (for example, the autonomous driving function is disabled), to avoid a safety risk and ensure driving safety in an autonomous driving mode.

Alternatively, for example, the sensor detection apparatus is located in the vehicle, the sensor detection apparatus may output an instruction to the CDC, and then the CDC outputs prompt information. For example, the CDC prompts, by using an ambient light, a sound, or an HMI, the user to take over the vehicle. This helps ensure driving safety in the autonomous driving mode.

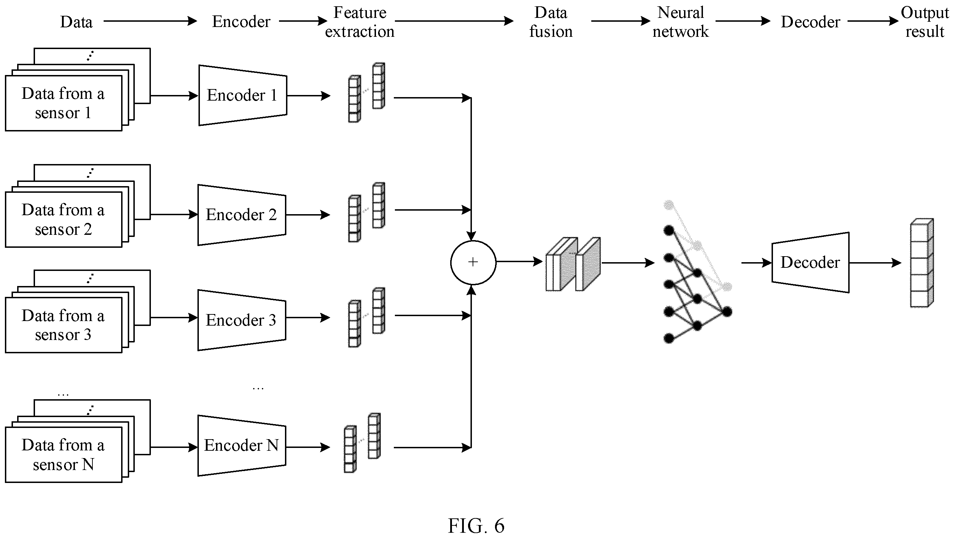

The following describes in detail a process of processing data by the sensor detection apparatus with reference to FIG. 6.

An input of the sensor detection apparatus may be one or more frames of data separately output by the sensor 1 to the sensor N. The sensor detection apparatus may separately extract, by using an encoder 1 to an encoder N, a corresponding feature from the data input by the sensor 1 to the sensor N, to obtain feature data. The encoder may use a rule-based encoding manner, or may use a neural network used for encoding to extract a feature of a corresponding sensor. If the encoder is a neural network, the encoder may be trained and optimized by using labeled data to obtain an optimal identification result.

In an embodiment, data output by the plurality of sensors of a same type may be input into a same encoder. In this case, a quantity of encoders may be less than a quantity of sensors. For example, there may be M encoders, where M is an integer less than N. For example, the vehicle includes a front-view camera, a left front-view camera, a right front-view camera, a left front lidar, a right front lidar, a left forward millimeter-wave radar, and a right forward millimeter-wave radar. In this case, data output by the front-view camera, the left front-view camera, and the right front-view camera may be input into an encoder 1, data output by the left front lidar and the right front lidar may be input into an encoder 2, and data output by the left forward millimeter-wave radar and the right forward millimeter-wave radar may be input into an encoder 3.

In an embodiment, different encoders may be designed for different sensors based on data features of the sensors. In this way, features of different sensors can be fully extracted, and feature data with a consistent form can be obtained.

For example, for an image captured by a camera, an image feature may be extracted by using a neural network architecture such as a visual geometry group (visual geometry group, VGG), a deep layer fusion (deep layer aggregation, DLA), or a ResNet. For example, feature data extracted by the sensor detection apparatus from data output by the camera is a three-dimensional matrix W×H×D₁. Herein, W indicates a quantity of rows of the matrix, H indicates a quantity of columns of the matrix, and D₁ indicates a quantity of layers of the matrix.

For example, for a lidar, a point cloud may be gridded, and a feature of the point cloud in each grid is obtained as an indication of each grid, to obtain features of the point cloud. Alternatively, the point cloud may be converted into an image coordinate system, and depth information of each pixel in an image is obtained as a feature of the lidar. For example, feature data extracted by the sensor detection apparatus from data output by the lidar is a three-dimensional matrix W×H×D₂. Herein, W indicates a quantity of rows of the matrix, H indicates a quantity of columns of the matrix, and D₂ indicates a quantity of layers of the matrix.

For example, for a millimeter-wave radar, a location of a target of the millimeter-wave radar may be converted into an image coordinate system, and a range and a radar cross section (radar cross section, RCS) feature are used as features of the millimeter-wave radar. For example, feature data extracted by the sensor detection apparatus from data output by the millimeter-wave radar is a three-dimensional matrix W×H×D₃. Herein, W indicates a quantity of rows of the matrix, H indicates a quantity of columns of the matrix, and D₃ indicates a quantity of layers of the matrix.

It should be understood that, in this embodiment of this application, that the encoder 1 to the encoder N obtain the feature data with the consistent form may alternatively be understood as that the feature data obtained by the encoder 1 to the encoder N is in a same coordinate system (for example, an image coordinate system or a bird eye view (bird eye view, BEV)). Further, the feature data extracted by the encoder 1 to the encoder N has a same size in a same dimension. For example, the extracted feature data is a three-dimensional matrix, and feature matrices extracted by the encoder 1 to the encoder N may have a same quantity of rows and a same quantity of columns.

After encoding all data, the sensor detection apparatus may perform data fusion at a feature layer. A data fusion manner may be feature superposition in another dimension, data enhancement, or the like.

For example, the sensor detection apparatus may perform data fusion through concat superposition. For data from different sensors, corresponding feature data of the sensors is obtained through feature extraction, and then feature fusion is performed. A fusion manner may be concat superposition, and therefore fused feature data is obtained. For example, superposition is performed in a third dimension of each feature. For example, the feature data extracted from the data collected by the camera is the three-dimensional matrix W×H×D₁, the feature data extracted from the data collected by the lidar is the three-dimensional matrix W×H×D₂, and the feature data extracted from the data collected by the millimeter-wave radar is the three-dimensional matrix W×H×D₃. In this case, fused data may be a three-dimensional matrix W×H×(D₁+D₂+D₃).

In this embodiment of this application, a feature layer fusion manner is used, so that the sensor detection apparatus is insensitive to a change of information about sensors. For different sensors, adaptation can be completed with only a small amount of training, and same detection performance can be maintained.

The sensor detection apparatus may perform, by using a neural network used for inference, inference on the data fused at the feature layer. The neural network may be a neural network trained by using labeled data, so that fused features of the sensors can be well processed. The neural network herein may use a temporal convolutional network, for example, a temporal convolutional network. For example, data collected by each of a plurality of sensors and a clean status of each sensor are obtained at a same moment. The labeled data may be understood as a data set obtained through classifying the collected data. For example, when there is water on a camera and there is water on a lidar, data collected by a plurality of sensors (including the camera and the lidar) at this moment may form a data set. The data set may include image data collected by the camera and point cloud data collected by the lidar. The data set is labeled with water on the camera and water on the lidar. In this case, the labeled data set may be used as data labeled when there is water on the camera and the lidar.

A process of performing inference on the fused data by using the neural network used for inference may alternatively be understood as a process in which the sensor detection apparatus performs feature extraction on the fused three-dimensional matrix W×H×(D₁+D₂+D₃). An inference result of the neural network may also be a three-dimensional matrix. It should be understood that the three-dimensional matrix obtained through inference by using the neural network may be inconsistent with the three-dimensional matrix W×H×(D₁+D₂+D₃) input to the neural network in three dimensions: a quantity of rows, columns, and layers.

Inference data may be decoded by a decoder, and then clean statuses of the sensor 1 to the sensor N are output. The decoder herein may use a rule-based decoding manner, or may use a neural network used for decoding to perform a classification task. If the decoder is a neural network, the decoder may be trained by using labeled data to obtain an optimal identification result.

In this embodiment of this application, clean status information that is of a sensor and that is output by the sensor detection apparatus may include an identifier and a clean status of the sensor, and may further include one or more of the following: a type of the sensor, a type of an attached object, a scenario, or the like. The clean status may include clean, blocked, a clean degree, or the like. The type of the sensor may include a camera apparatus, a lidar, a millimeter-wave radar, an ultrasonic radar, and the like. The type of the attached object may include dust, sewage, ice and snow, solid dirt, or the like. The scenario may include rain, snow, sand dust, or the like. For example, the clean status information may be output as follows: The sensor is clean, there is dust on a surface of the sensor, there is solid dirt on the surface of the sensor, there is sewage attached to the surface of the sensor, there is ice and snow attached to the surface of the sensor, there is rain continuously attached to the surface of the sensor in a rainy scenario, there is snow continuously attached to the surface of the sensor in a snowy scenario, and the like.

For another example, the sensor detection apparatus may indicate the identifier and the clean status of the sensor by using an output flag bit. For example, the identifier of the sensor may be 000, 001, 010, or 011. Herein, 000 indicates that the sensor is the front-view camera, 001 indicates that the sensor is the left front lidar, 010 indicates that the sensor is the left forward millimeter-wave radar, and 011 indicates that the sensor is the left front ultrasonic radar. The clean status may be 0 or 1. Herein, 0 indicates that the sensor is clean, and 1 indicates that dirt is attached to the sensor.

Further, if the clean status is 1, an output result may include the type of the attached object on the sensor. For example, the type of the attached object may be 0001, 0010, 0011, 0100, or 0101. Herein, 0000 indicates that the attached object is water, 0010 indicates that the attached object is ice, 0011 indicates that the attached object is dust, 0100 indicates that the attached object is metal, and 0101 indicates that the attached object is non-metal.

It should be noted that the foregoing descriptions are all examples. This embodiment of this application is not limited thereto.

The sensor cleaning apparatus may perform different cleaning operations based on an output of the sensor detection apparatus. For example, if there is dust or solid dirt on the surface of the sensor, a water spraying module may be first invoked to clean the surface of the sensor, and then a heating module is invoked to dry moisture on the surface of the sensor. For another example, if the sensor detection apparatus identifies that there is water or ice and snow attached and blocked, a heating module may be directly used to dry moisture or melt the ice and snow.

It should be understood that, a process in which the sensor cleaning apparatus performs a cleaning operation is not specifically limited in this embodiment of this application. A processing method of the sensor cleaning apparatus may be variable. For example, for a case in which there is dust, a manner such as air blowing, heating and drying after water spraying, air blowing and drying after water spraying, or wiping off residual water by using a mechanical apparatus after water spraying.

In an embodiment, if a result output by the sensor detection apparatus indicates that dirt is attached to a surface of a sensor, the sensor detection apparatus may send an instruction to the prompt apparatus, where the instruction instructs that the dirt is attached to the surface of the sensor. In response to receiving the instruction, the prompt apparatus may prompt, by using an ambient light in the vehicle, the user that the dirt is attached to the surface of the sensor. For example, the prompt apparatus prompts, by controlling an ambient light on a dashboard to display red, the user that the dirt is attached to the surface of the sensor. Alternatively, the prompt apparatus may prompt, by controlling a vehicle-mounted voice assistant by using a sound, the user that the dirt is attached to the surface of the sensor and the sensor cleaning apparatus is cleaning the sensor. Alternatively, the prompt apparatus may prompt, by controlling an HMI, the user that the dirt is attached to the surface of the sensor and the sensor cleaning apparatus is cleaning the sensor.

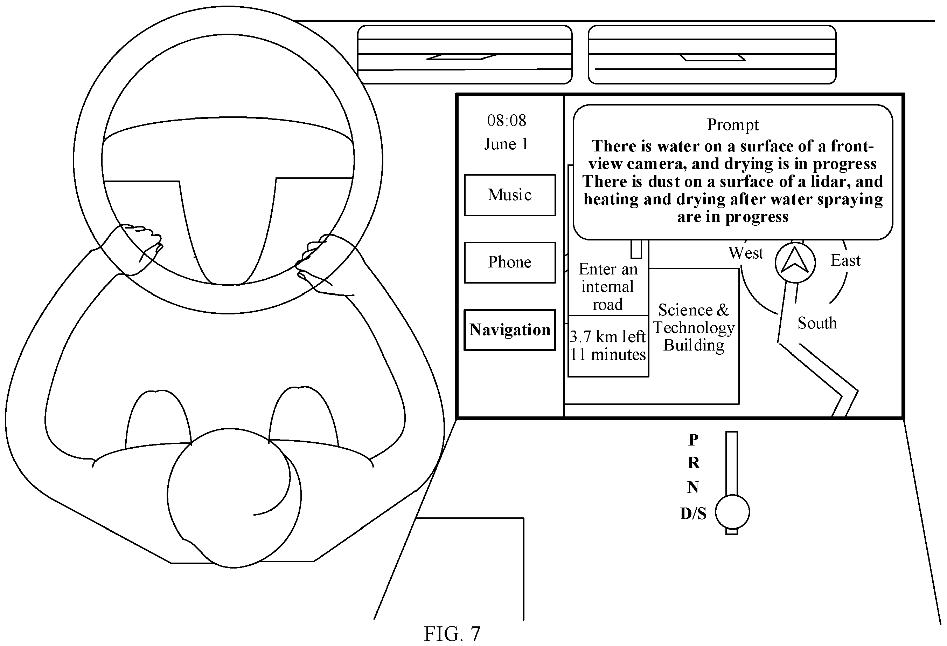

For example, as shown in FIG. 7, if the result output by the sensor detection apparatus indicates that there is water on a surface of the front-view camera and there is dust on a surface of the lidar, in a process in which the sensor detection apparatus controls the sensor cleaning apparatus to clean the water on the surface of the camera, the sensor detection apparatus may prompt, by using a large central display screen, the user that "There is water on the surface of the front-view camera, and drying is in progress" and "There is water on the surface of the lidar, and heating and drying after water spraying are in progress".

In an embodiment, after the sensor cleaning apparatus cleans the sensor, the sensor detection apparatus may continue to obtain data collected by the sensor. If the result output by the sensor detection apparatus indicates that the sensor is in a clean state, the sensor detection apparatus may further control the prompt apparatus to prompt, by using a sound, the user that the sensor is clean, or may prompt, by using the HMI, the user that the sensor is clean.

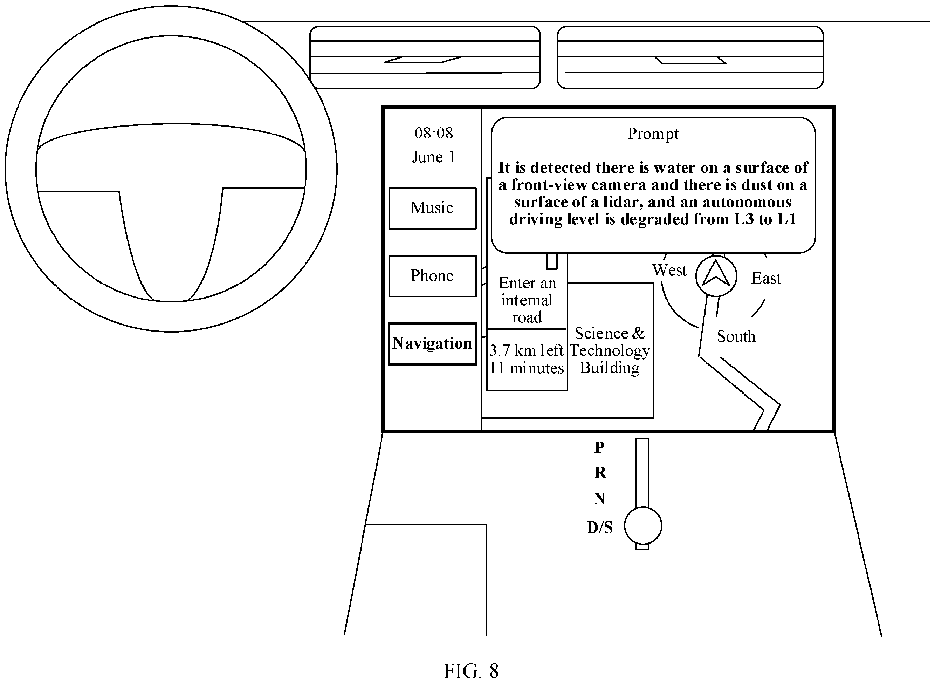

For example, as shown in FIG. 8, if the vehicle is currently in an autonomous driving state, when the result output by the sensor detection apparatus indicates that there is water on the surface of the front-view camera and there is dust on the surface of the lidar, the sensor detection apparatus may output clean statuses of the sensors to an autonomous driving safety module. The autonomous driving safety module may degrade an autonomous driving level from L3 to L1 based on the clean statuses of the sensors, and prompt, by using the HMI, the user that "It is detected that there is water on the surface of the front-view camera and there is dust on the surface of the lidar, and the autonomous driving level is degraded from L3 to L1".

In this embodiment of this application, because the sensor detection apparatus simultaneously detects a plurality of sensors, the sensor detection apparatus may send clean statuses of the sensors to the autonomous driving safety module. The autonomous driving safety module may obtain clean statuses of sensors in the entire vehicle in real time, and determine a confidence level of external environment information obtained by the sensors, to determine whether to continue to maintain a current autonomous driving level or perform function degradation on an autonomous driving level. This helps ensure driving safety of an autonomous driving vehicle, and improves a function of a sensor clean status identification system in the vehicle.

In this embodiment of this application, mutual fusion between the plurality of sensors can resolve a problem of inaccurate identification of dirt that is caused by a single sensor, so that accuracy of identifying clean statuses of the sensors is improved. A scenario such as a rainy day or a snowy day can be better identified based on data between the plurality of sensors. This can effectively reduce false detection such as snowflakes or stains, and can provide a correct cleaning instruction for the sensor cleaning apparatus. For example, a network will learn that it is very likely that an attached object is ice and snow on a surface in a snowy scenario. For a snowflake scenario, a heating and snow melting function should be enabled, instead of enabling a water spray cleaning function caused by detecting snowflakes as muck by mistake.

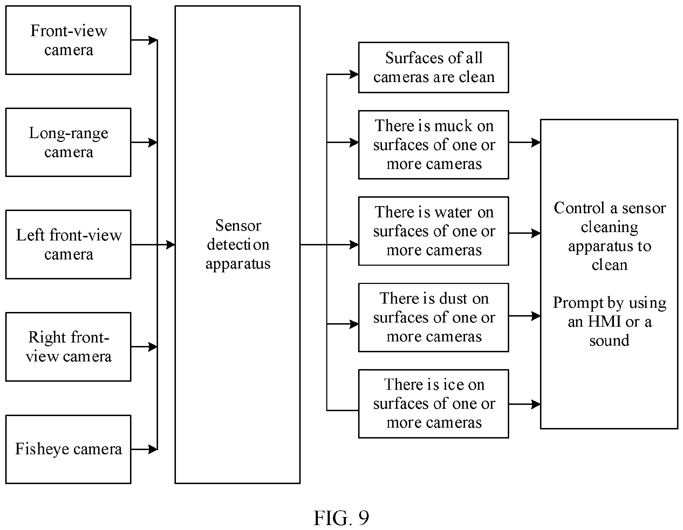

The following describes processes of identifying clean statuses of several specific sensors with reference to FIG. 9 to FIG. 15.

As shown in FIG. 9, sensors in the vehicle may include a front-view camera, a long-range camera, a left front-view camera, a right front-view camera, and a fisheye camera. After data obtained by these cameras is input into the sensor detection apparatus, the sensor detection apparatus may output clean statuses of the sensors: Surfaces of all cameras are clean; there is muck on surfaces of one or more cameras; there is water on the surfaces of one or more cameras; there is dust on the surfaces of one or more cameras; and there is ice on the surfaces of one or more cameras. Optionally, if there is dirt on surfaces of at least some cameras, the sensor detection apparatus may invoke the sensor cleaning apparatus to clean, in a targeted manner, the cameras to which the dirt is attached. Optionally, if there is dirt on surfaces of at least some cameras, the sensor detection apparatus may alternatively control the prompt apparatus to prompt, by using an HMI or a sound, the user with clean statuses of the cameras.

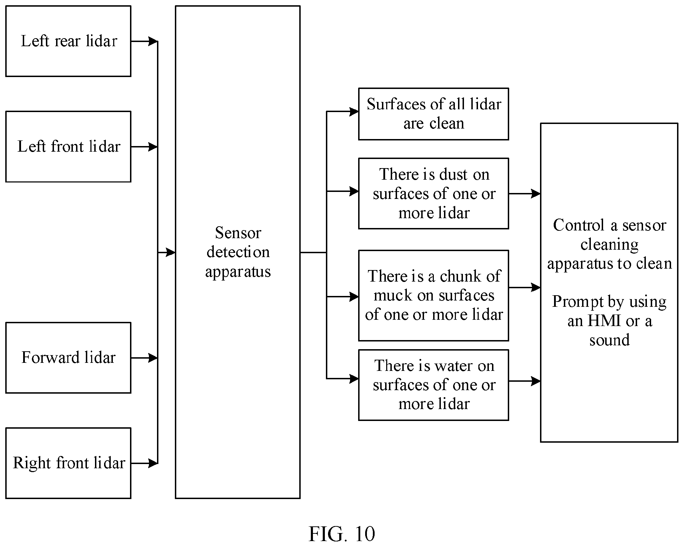

As shown in FIG. 10, sensors in the vehicle may include a left rear lidar, a left front lidar, a forward lidar, and a right front lidar. After data obtained by these lidar is input into the sensor detection apparatus, the sensor detection apparatus may output clean statuses of the sensors: Surfaces of all lidar are clean; there is dust on surfaces of one or more lidar; there is a chunk of muck on the surfaces of one or more lidar; and there is water on the surfaces of one or more lidar. Optionally, if there is dirt on surfaces of at least some lidar, the sensor detection apparatus may invoke the sensor cleaning apparatus to clean the sensors in a targeted manner. Optionally, if there is dirt on surfaces of at least some lidar, the sensor detection apparatus may alternatively control the prompt apparatus to prompt, by using an HMI or a sound, the user with clean statuses of the lidar.

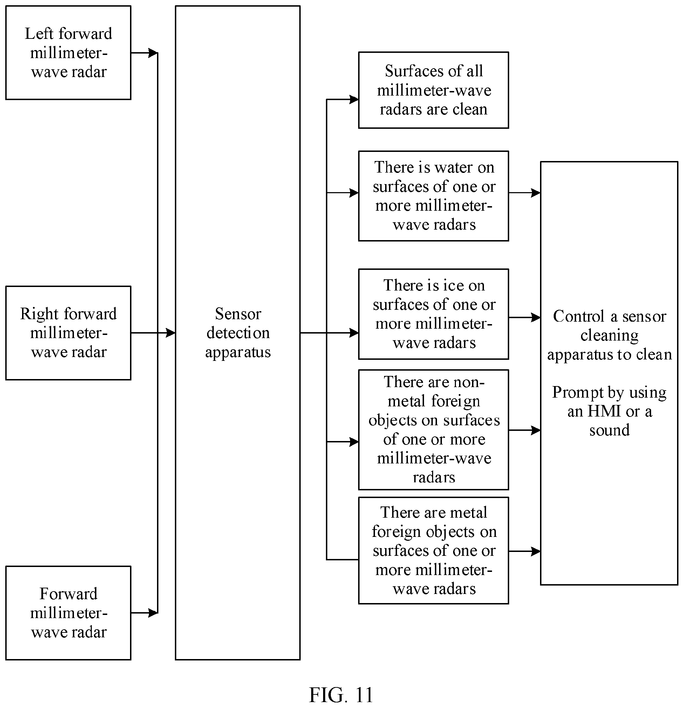

As shown in FIG. 11, sensors in the vehicle may include a left forward millimeter-wave radar, a right forward millimeter-wave radar, and a forward millimeter-wave radar. After data obtained by these millimeter-wave radars is input into the sensor detection apparatus, the sensor detection apparatus may output clean statuses of the sensors: Surfaces of all millimeter-wave radars are clean; there is water on surfaces of one or more millimeter-wave radars; there is ice on the surfaces of one or more millimeter-wave radars; there are non-metal foreign objects on the surfaces of one or more millimeter-wave radars; and there are metal foreign objects on the surfaces of one or more millimeter-wave radars. Optionally, if there is dirt on surfaces of at least some millimeter-wave radars, the sensor detection apparatus may invoke the sensor cleaning apparatus to clean the sensors in a targeted manner. Optionally, if there is dirt on surfaces of at least some millimeter-wave radars, the sensor detection apparatus may alternatively control the prompt apparatus to prompt, by using an HMI or a sound, the user with clean statuses of the millimeter-wave radars.

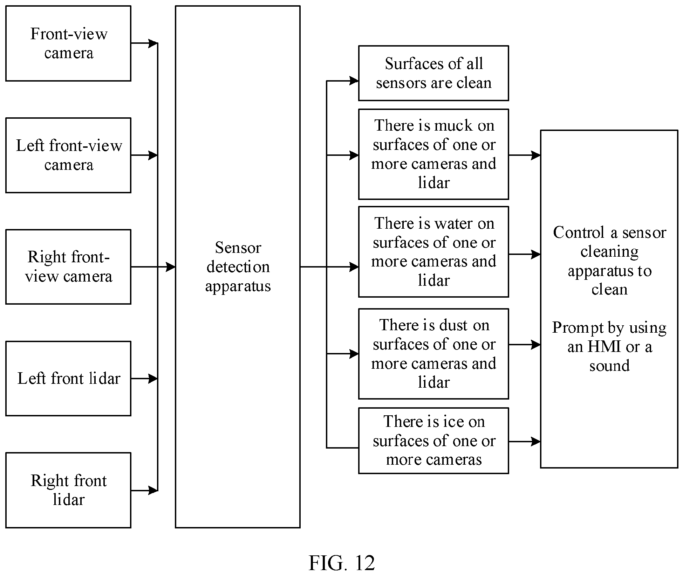

In FIG. 9 to FIG. 11, a plurality of sensors of a same type are used as examples for description. The following provides descriptions based on a plurality of sensors of different types with reference to FIG. 12 to FIG. 15.

As shown in FIG. 12, sensors in the vehicle may include a front-view camera, a left front-view camera, a right front-view camera, a left front lidar, and a right front lidar. After data obtained by these sensors is input into the sensor detection apparatus, the sensor detection apparatus may output clean statuses of the sensors: Surfaces of all sensors are clean; there is muck on surfaces of one or more cameras and lidar; there is water on the surfaces of one or more cameras and lidar; there is dust on the surfaces of one or more cameras and lidar; and there is ice on the surfaces of one or more cameras. Optionally, if there is dirt on surfaces of at least some sensors, the sensor detection apparatus may invoke the sensor cleaning apparatus to clean the sensors in a targeted manner. Optionally, if there is dirt on surfaces of at least some sensors, the sensor detection apparatus may alternatively control the prompt apparatus to prompt, by using an HMI or a sound, the user with clean statuses of the sensors.

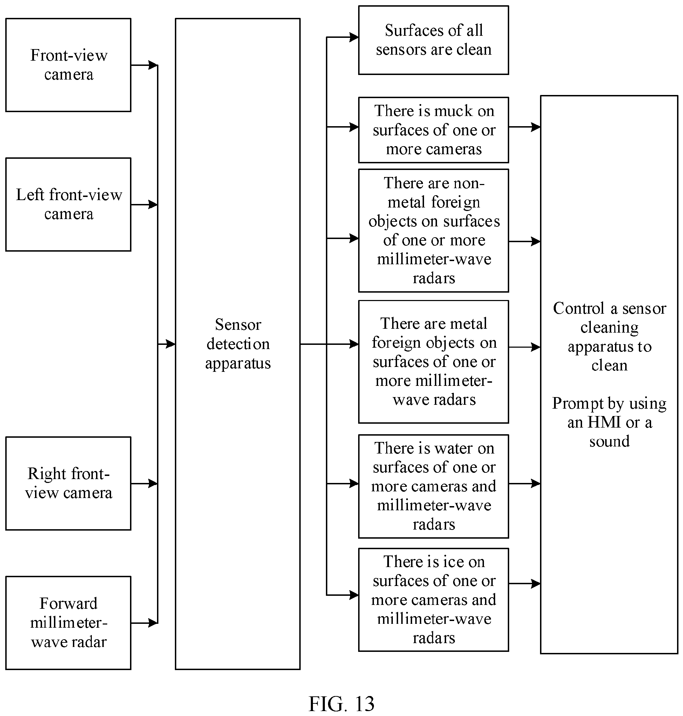

As shown in FIG. 13, sensors in the vehicle may include a front-view camera, a left front-view camera, a right front-view camera, and a forward millimeter-wave radar. After data obtained by these sensors is input into the sensor detection apparatus, the sensor detection apparatus may output clean statuses of the sensors: Surfaces of all sensors are clean; there is muck on surfaces of one or more cameras; there are non-metal foreign objects on surfaces of one or more millimeter-wave radars; there are metal foreign objects on the surfaces of one or more millimeter-wave radars; there is water on the surfaces of one or more cameras and millimeter-wave radars; and there is ice on the surfaces of one or more cameras and millimeter-wave radars. Optionally, if there is dirt on surfaces of at least some sensors, the sensor detection apparatus may invoke the sensor cleaning apparatus to clean the sensors in a targeted manner. Optionally, if there is dirt on surfaces of at least some sensors, the sensor detection apparatus may alternatively control the prompt apparatus to prompt, by using an HMI or a sound, the user with clean statuses of the sensors.

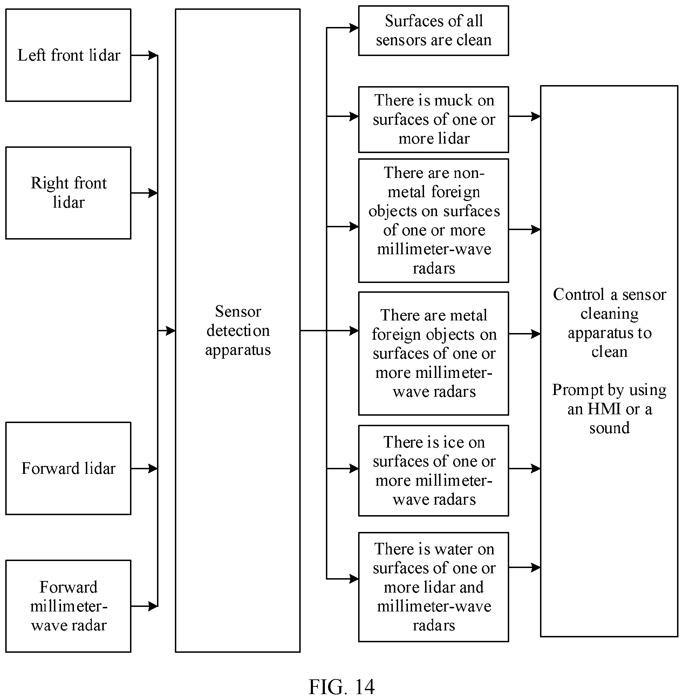

As shown in FIG. 14, sensors in the vehicle may include a left front lidar, a right front lidar, a forward lidar, and a forward millimeter-wave radar. After data obtained by these sensors is input into the sensor detection apparatus, the sensor detection apparatus may output clean statuses of the sensors: Surfaces of all sensors are clean; there is muck on surfaces of one or more lidar; there are non-metal foreign objects on surfaces of one or more millimeter-wave radars; there are metal foreign objects on the surfaces of one or more millimeter-wave radars; there is ice on the surfaces of one or more millimeter-wave radars; and there is water on the surfaces of one or more lidar and millimeter-wave radars. Optionally, if there is dirt on surfaces of at least some sensors, the sensor detection apparatus may invoke the sensor cleaning apparatus to clean the sensors in a targeted manner. Optionally, if there is dirt on surfaces of at least some sensors, the sensor detection apparatus may alternatively prompt, by using an HMI or a sound, the user with clean statuses of the sensors.

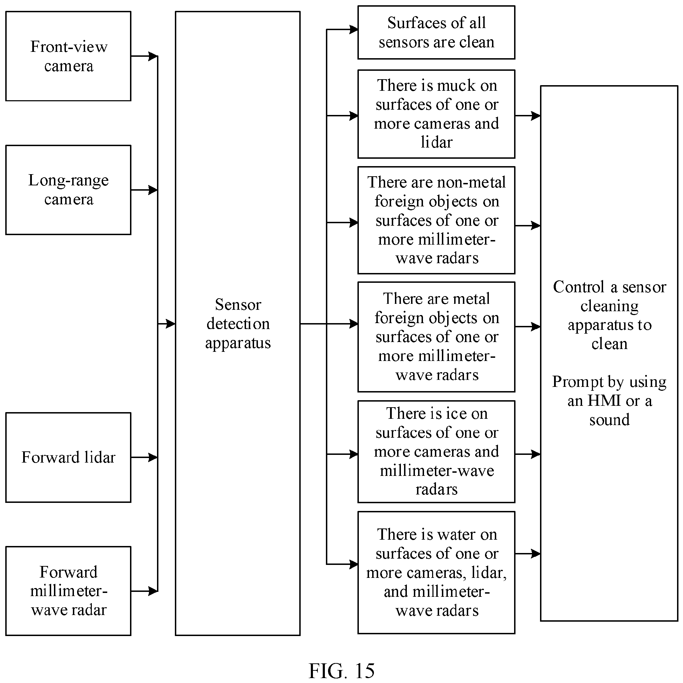

As shown in FIG. 15, sensors in the vehicle may include a front-view camera, a long-range camera, a forward lidar, and a forward millimeter-wave radar. After data obtained by these sensors is input into the sensor detection apparatus, the sensor detection apparatus may output clean statuses of the sensors: Surfaces of all sensors are clean; there is muck on surfaces of one or more cameras and lidar; there are non-metal foreign objects on surfaces of one or more millimeter-wave radars; there are metal foreign objects on the surfaces of one or more millimeter-wave radars; there is ice on the surfaces of one or more cameras and millimeter-wave radars; and there is water on the surfaces of one or more cameras, lidar and millimeter-wave radars. Optionally, if there is dirt on surfaces of at least some sensors, the sensor detection apparatus may invoke the sensor cleaning apparatus to clean the sensors in a targeted manner. Optionally, if there is dirt on surfaces of at least some sensors, the sensor detection apparatus may alternatively control the prompt apparatus to prompt, by using an HMI or a sound, the user with clean statuses of the sensors.

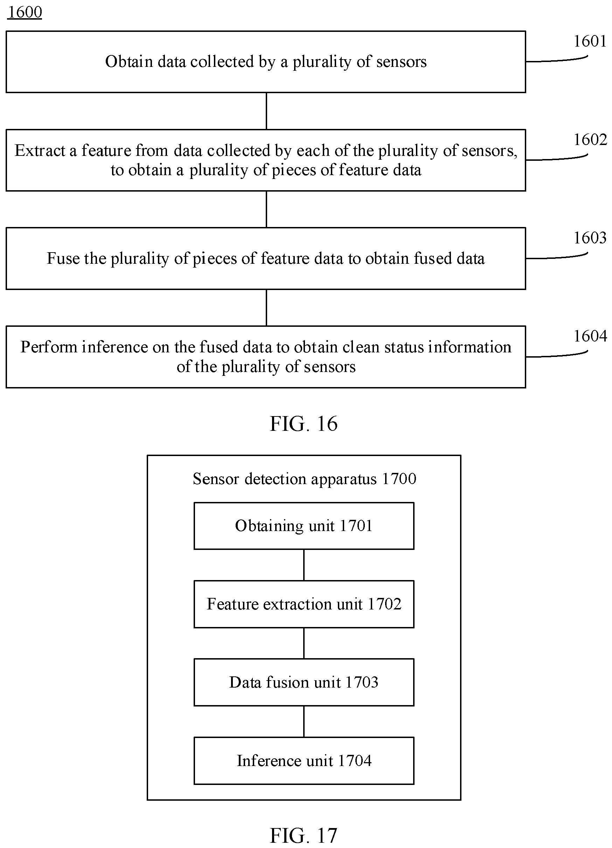

FIG. 16 is a schematic flowchart of a sensor cleaning method 1600 according to an embodiment of this application. The method 1600 includes the following steps.

S1601: Obtain data collected by a plurality of sensors.

Optionally, the plurality of sensors include at least two of a camera apparatus, a lidar, a millimeter-wave radar, or an ultrasonic radar.

S1602: Extract a feature from data collected by each of the plurality of sensors, to obtain a plurality of pieces of feature data.

Optionally, the extracting a feature from data collected by each of the plurality of sensors, to obtain a plurality of pieces of feature data includes: separately inputting the data collected by each of the plurality of sensors into a plurality of encoders, to obtain the plurality of pieces of feature data.

Optionally, the encoder may be a rule-based encoder, or the encoder may be a neural network.

Optionally, the plurality of pieces of feature data are feature data in a first coordinate system.

Optionally, the first coordinate system is an image coordinate system or a bird eye view BEV coordinate system.

S1603: Fuse the plurality of pieces of feature data to obtain fused data.

It should be understood that, for a process of fusing the plurality of pieces of feature data, refer to the descriptions in the foregoing embodiments. Details are not described herein again.

S1604: Perform inference on the fused data to obtain clean status information of each of the plurality of sensors.

Optionally, the performing inference on the fused data to obtain clean status information of each of the plurality of sensors includes: performing inference on the fused data to obtain inference data; and decoding the inference data to obtain clean status information of the plurality of sensors.

Optionally, the decoding the inference data includes: inputting the inference data into a decoder, to obtain first piece of clean status information of the sensors.

Optionally, the decoder may be a rule-based encoder, or the decoder may be a neural network.

Optionally, the method further includes: determining, based on the clean status information of each of the plurality of sensors, that at least one sensor in the plurality of sensors needs to be cleaned; and controlling a sensor cleaning apparatus to clean the at least one sensor.

Optionally, clean status information of the at least one sensor includes information indicating that an object is attached to a surface of each sensor in the at least one sensor and a type of the object. The controlling a sensor cleaning apparatus to clean the at least one sensor includes: cleaning each sensor in the at least one sensor based on the type of the object attached to the surface of each sensor in the at least one sensor.

Optionally, the method is applied to a vehicle. The method further includes: determining, based on the clean status information of each of the plurality of sensors, a confidence level of the data collected by each of the plurality of sensors; and degrading an autonomous driving level based on the confidence level of the data collected by each of the plurality of sensors, or sending a first instruction to a first prompt apparatus, where the first instruction instructs the first prompt apparatus to prompt a user to take over the vehicle.

For example, when dirt is attached to a camera and the dirt is water, it may be determined that a confidence level of data collected by the camera is 90%. Alternatively, when dirt is attached to a camera and the dirt is dust, it may be determined that a confidence level of data collected by the camera is 80%.

For example, when dirt is attached to a lidar and the dirt is water, it may be determined that a confidence level of data collected by the lidar is 80%. Alternatively, when dirt is attached to a lidar and the dirt is muck, it may be determined that a confidence level of data collected by the lidar is 60%.

For example, the vehicle is in an autonomous driving state (for example, an autonomous driving level L3 specified in the SAE). When the confidence level of the data collected by the camera is less than 85%, the vehicle may degrade the autonomous driving level from L3 to L1. Alternatively, when the confidence level of the data collected by the lidar is less than 75%, the vehicle may degrade the autonomous driving level from L3 to L1.

In an embodiment, the plurality of sensors may be located in the vehicle. The method further includes: when an instruction instructing a user to start the vehicle is obtained, determining, based on the clean status information of each of the plurality of sensors, a confidence level of the data collected by each of the plurality of sensors; and determining, based on the confidence level of the data collected by each of the plurality of sensors, not to start the vehicle, or prompting to start the vehicle after cleaning the sensors.

It should be understood that a value of the confidence level and a preset threshold in the foregoing examples are merely examples. This is not specifically limited in this embodiment of this application.

Optionally, the method further includes: sending a second instruction to a second prompt apparatus, where the second instruction instructs the second prompt apparatus to prompt the user with the clean status information of each of the plurality of sensors.

Optionally, that the second prompt apparatus prompts the user with the clean status information of each of the plurality of sensors includes: The second prompt apparatus prompts the user with the clean status information of the plurality of sensors by using an HMI and a sound.

Optionally, the second prompt apparatus is located in the vehicle, and that the second prompt apparatus prompts the user with the clean status information of each of the plurality of sensors includes: The second prompt apparatus prompts the user with the clean status information of the plurality of sensors by using an ambient light.

In some possible implementations, the sensor detection method may be performed by a sensor detection apparatus or a computing platform. The sensor detection apparatus or the computing platform may be located in a device, for example, an aircraft, a robot, or a vehicle.

In this embodiment of this application, the sensor detection apparatus may extract features from the data collected by the plurality of sensors and perform data fusion, and then perform inference on fused data to obtain clean statuses of the plurality of sensors. This helps improve accuracy of detecting the clean statuses of the sensors. In addition, the sensor detection apparatus simultaneously obtains the clean statuses of the plurality of sensors, so that an intelligent device can better understand availability of the sensors in this case. For some intelligent devices (for example, a vehicle), security performance of the intelligent devices can be improved.

FIG. 17 is a schematic block diagram of a sensor detection apparatus 1700 according to an embodiment of this application. As shown in FIG. 17, the sensor detection apparatus 1700 includes:
an obtaining unit 1701, configured to obtain data collected by a plurality of sensors;
a feature extraction unit 1702, configured to extract a feature from data collected by each of the plurality of sensors, to obtain a plurality of pieces of feature data;
a data fusion unit 1703, configured to fuse the plurality of pieces of feature data to obtain fused data; and
an inference unit 1704, configured to perform inference on the fused data to obtain clean status information of each of the plurality of sensors.

Optionally, the sensor detection apparatus 1700 further includes:
a first determining unit, configured to determine, based on the clean status information of each of the plurality of sensors, that at least one sensor in the plurality of sensors needs to be cleaned; and
a first control unit, configured to control a sensor cleaning apparatus to clean the at least one sensor.

Optionally, clean status information of the at least one sensor includes information indicating that an object is attached to a surface of each sensor in the at least one sensor and a type of the object. The control unit is specifically configured to clean each sensor in the at least one sensor based on the type of the object attached to the surface of each sensor in the at least one sensor.

Optionally, the sensor detection apparatus 1700 further includes:
a second determining unit, configured to determine, based on the clean status information of each of the plurality of sensors, a confidence level of the data collected by each of the plurality of sensors; and
a second control unit, configured to control, based on the confidence level of the data collected by each of the plurality of sensors, an autonomous driving system to degrade an autonomous driving level, or send a first instruction to a first prompt apparatus, where the first instruction instructs the first prompt apparatus to prompt a user to take over a vehicle.

Optionally, the sensor detection apparatus may send an instruction to the autonomous driving system, where the instruction instructs the clean status information of each sensor. The autonomous driving system may determine, based on the clean status information of each sensor, the confidence level of the data collected by each of the plurality of sensors. Then, the autonomous driving system degrades the autonomous driving level based on the confidence level of the data collected by each of the plurality of sensors.

Optionally, the sensor detection apparatus 1700 further includes:
a sending unit, configured to send a second instruction to a second prompt apparatus, where the second instruction instructs the second prompt apparatus to prompt the user with the clean status information of each of the plurality of sensors.

Optionally, the plurality of sensors include at least two of a camera apparatus, a lidar, a millimeter-wave radar, or an ultrasonic radar.

Optionally, the plurality of pieces of feature data all are feature data in a first coordinate system.

Optionally, the first coordinate system is an image coordinate system or a bird eye view BEV coordinate system.

Optionally, the sensor detection apparatus is located in a cloud server.

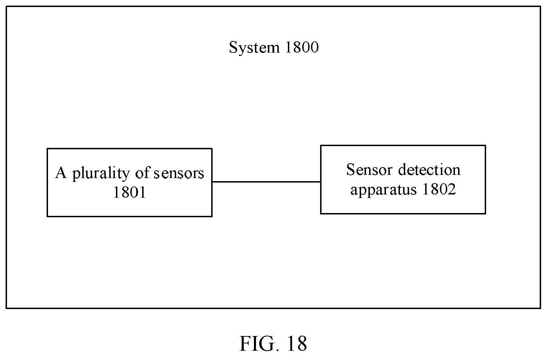

FIG. 18 is a schematic block diagram of a system 1800 according to an embodiment of this application. As shown in FIG. 18, the system includes a plurality of sensors 1801 and a sensor detection apparatus 1802. The sensor detection apparatus 1802 may be the sensor detection apparatus 1700.

Optionally, the sensor detection apparatus may be located in a cloud server.

Optionally, if the sensor detection apparatus is a sensor detection apparatus located in the cloud server, the system 1800 further includes an apparatus configured to receive an instruction of the sensor detection apparatus 1802.

An embodiment of this application further provides an apparatus. The apparatus includes a processing unit and a storage unit. The storage unit is configured to store instructions, and the processing unit executes the instructions stored in the storage unit, so that the apparatus performs the foregoing sensor cleaning method.

Optionally, the processing unit may be the processor 151 shown in FIG. 1, and the storage unit may be the memory 152 shown in FIG. 1. The memory 152 may be a storage unit (for example, a register or a cache) in a chip, or may be a storage unit (for example, a read-only memory or a random access memory) located outside a chip in a vehicle.

An embodiment of this application further provides an intelligent device, including the sensor detection apparatus 1700 or the system 1800.

Optionally, the intelligent device may include an aircraft, a robot, or a vehicle.

An embodiment of this application further provides a computer program product. The computer program product includes computer program code. When the computer program code is run on a computer, the computer is enabled to perform the foregoing method.

An embodiment of this application further provides a computer-readable medium. The computer-readable medium stores program code, and when the computer program code is run on a computer, the computer is enabled to perform the foregoing method.

In an implementation process, steps in the foregoing method may be completed by a hardware integrated logic circuit in the processor 151 or instructions in a form of software. The method disclosed with reference to embodiments of this application may be directly performed and completed by a hardware processor, or may be performed and completed by a combination of hardware and software modules in the processor 151. A software module may be located in a mature storage medium in the art, such as a random access memory, a flash memory, a read-only memory, a programmable read-only memory, an electrically erasable programmable memory, or a register. The storage medium is located in the memory. The processor 151 reads information in the memory 152, and completes the steps in the foregoing method in combination with hardware of the processor. To avoid repetition, details are not described herein again.

It should be further understood that in embodiments of this application, the memory 152 may include a read-only memory and a random access memory, and provide instructions and data to the processor.

In embodiments of this application, "first", "second", and various numeric numbers are merely used for distinguishing for ease of description, and are not intended to limit the scope of embodiments of this application. For example, "first", "second", and various numeric numbers are used for distinguishing between different pipes, through holes, and the like.

It should be understood that the term "and/or" in this specification describes only an association relationship between associated objects and indicates that three relationships may exist. For example, A and/or B may indicate the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it shall not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A sensor detection method, comprising:
obtaining data collected by a plurality of sensors;
extracting a feature from data collected by each of the plurality of sensors, to obtain a plurality of pieces of feature data;
fusing the plurality of pieces of feature data to obtain fused data; and
performing inference on the fused data to obtain clean status information of each of the plurality of sensors.

2. The method according to claim 1, wherein the method further comprises:
determining, based on the clean status information of each of the plurality of sensors, that at least one sensor in the plurality of sensors needs to be cleaned; and
controlling a sensor cleaning apparatus to clean the at least one sensor.

3. The method according to claim 2, wherein clean status information of the at least one sensor comprises information indicating that an object is attached to a surface of each sensor in the at least one sensor and a type of the object, and the controlling a sensor cleaning apparatus to clean the at least one sensor comprises:
cleaning each sensor in the at least one sensor based on the type of the object attached to the surface of each sensor in the at least one sensor.

4. The method according to claim 1, wherein the method is applied to a vehicle, and the method further comprises:
determining, based on the clean status information of each of the plurality of sensors, a confidence level of the data collected by each of the plurality of sensors; and
degrading an autonomous driving level based on the confidence level of the data collected by each of the plurality of sensors, or sending a first instruction to a first prompt apparatus, wherein the first instruction instructs the first prompt apparatus to prompt a user to take over the vehicle.

5. The method according to any one of claims 1 to 4, wherein the method further comprises:
sending a second instruction to a second prompt apparatus, wherein the second instruction instructs the second prompt apparatus to prompt the user with the clean status information of each of the plurality of sensors.

6. The method according to any one of claims 1 to 5, wherein the plurality of sensors comprise at least two of a camera apparatus, a lidar, a millimeter-wave radar, or an ultrasonic radar.

7. The method according to any one of claims 1 to 6, wherein the plurality of pieces of feature data all are feature data in a first coordinate system.

8. The method according to claim 7, wherein the first coordinate system is an image coordinate system or a bird eye view BEV coordinate system.

9. A sensor detection apparatus, comprising:
an obtaining unit, configured to obtain data collected by a plurality of sensors;
a feature extraction unit, configured to extract a feature from data collected by each of the plurality of sensors, to obtain a plurality of pieces of feature data;
a data fusion unit, configured to fuse the plurality of pieces of feature data to obtain fused data; and
an inference unit, configured to perform inference on the fused data to obtain clean status information of each of the plurality of sensors.

10. The apparatus according to claim 9, wherein the apparatus further comprises:
a first determining unit, configured to determine, based on the clean status information of each of the plurality of sensors, that at least one sensor in the plurality of sensors needs to be cleaned; and
a first control unit, configured to control a sensor cleaning apparatus to clean the at least one sensor.

11. The apparatus according to claim 10, wherein clean status information of the at least one sensor comprises information indicating that an object is attached to a surface of each sensor in the at least one sensor and a type of the object, and the control unit is specifically configured to clean each sensor in the at least one sensor based on the type of the object attached to the surface of each sensor in the at least one sensor.

12. The apparatus according to claim 9, wherein the apparatus further comprises:
a second determining unit, configured to determine, based on the clean status information of each of the plurality of sensors, a confidence level of the data collected by each of the plurality of sensors; and
a second control unit, configured to degrade an autonomous driving level based on the confidence level of the data collected by each of the plurality of sensors, or send a first instruction to a first prompt apparatus, wherein the first instruction is used by the first prompt apparatus to prompt a user to take over a vehicle.

13. The apparatus according to any one of claims 9 to 12, wherein the apparatus further comprises:
a sending unit, configured to send a second instruction to a second prompt apparatus, wherein the second instruction instructs the second prompt apparatus to prompt the user with the clean status information of each of the plurality of sensors.

14. The apparatus according to any one of claims 9 to 13, wherein the plurality of sensors comprise at least two of a camera apparatus, a lidar, a millimeter-wave radar, or an ultrasonic radar.

15. The apparatus according to any one of claims 9 to 14, wherein the plurality of pieces of feature data all are feature data in a first coordinate system.

16. The apparatus according to claim 15, wherein the first coordinate system is an image coordinate system or a bird eye view BEV coordinate system.

17. The apparatus according to any one of claims 9 to 16, wherein the apparatus is located in a cloud server.

18. A system, comprising a plurality of sensors and a sensor detection apparatus, wherein the sensor detection apparatus is the sensor detection apparatus according to any one of claims 9 to 17.

19. A vehicle, comprising the sensor detection apparatus according to any one of claims 9 to 17.

20. A computer-readable storage medium, wherein the computer-readable medium stores program code, and when the program code is run on a computer, the computer is enabled to perform the method according to any one of claims 1 to 8.
